# EUROPÄISCHE PATENTSCHRIFT

(11) **EP 3 824 014 B1**
(45) Veröffentlichungstag und Bekanntmachung des Hinweises auf die Patenterteilung: **29.12.2021**
(21) Anmeldenummer: 20780213.3
(22) Anmeldetag: 30.09.2020
(51) Int. Cl.: C08G 69/26, C08G 69/40, C08L 77/06

(54) **FORMMASSE ENTHALTEND POLYETHERAMID (PEA)**
MOULDING MATERIAL CONTAINING POLYETHERAMIDE (PEA)
MATIÈRE DE MOULAGE CONTENANT DU POLYÉTHÉRAMIDE (PEA)

(30) Priorität: 11.10.2019 EP 19202721
(43) Veröffentlichungstag der Anmeldung: 26.05.2021
(73) Patentinhaber: Evonik Operations GmbH, 45128 Essen (DE)
(72) Erfinder: BAUMANN, Franz-Erich, 48249 Dülmen (DE); SALWICZEK, Kathrin, 45655 Recklinghausen (DE)
(74) Vertreter: Evonik Patent Association
(86) Internationale Anmeldenummer: PCT/EP2020/077364
(87) Internationale Veröffentlichungsnummer: WO 2021/069277

(56) Entgegenhaltungen:
- US-A1- 2014 134 371

## Beschreibung

Die vorliegende Erfindung betrifft Formmasse enthaltend Polyetheramid (PEA), einen geformten Gegenstand daraus und seine Verwendung.

Polyetheramide (PEA) sind Blockcopolymere, welche durch Polykondensation von (Oligo-)Polyamiden, insbesondere säuregeregelten Polyamiden, mit alkohol- oder aminoterminierten Polyethern erhalten werden. Säuregeregelte Polyamide weisen Carbonsäureendgruppen im Überschuss auf. Die Polyamidblöcke bezeichnet der Fachmann als Hartblöcke und die Polyetherblöcke als Weichblöcke. Ihre Herstellung ist prinzipiell bekannt. Die DE2712987A1 (US4207410) beschreibt derartige Polyamid-Elastomere aus Lactamen mit 10 - 12 C-Atomen, Dicarbonsäuren und Polyetherdiolen. Die hiernach erhältlichen Produkte zeichnen sich durch dauerhafte Flexibilität und Duktilität auch bei tiefen Temperaturen aus, sind aber bereits in Formteilen mäßiger Schichtdicke trübe bis opak und fallen bei längerem Lagern bei Raumtemperatur durch oberflächliche Beläge, mit einem mehltauähnlichen Aspekt, auf. Ähnlich aufgebaute Polyamid-Elastomere, aufgebaut aus Diaminen mit 6 - 20 C-Atomen, aliphatischen oder aromatischen Dicarbonsäuren und Polyetherdiolen sind aus EP0095893 bekannt. Kennzeichnende Eigenschaften sind eine erhöhte Wärmeformbeständigkeit und Flexibilität. Hinsichtlich Transluzenz der Formteile und Belagsbildung lassen sich aus dieser Schrift keine Angaben entnehmen.

PA11-basierte und PA12-basierte PEA-Formmassen fallen ebenfalls durch opaken, trüben Aspekt oder Bildung von Oberflächenbelägen negativ auf. Weiterhin wurde beobachtet, dass sie einen hohen Belag bei gleichzeitig geringer Transluzenz aufweisen. Die aktuellen Formmassen sind daher für Anwendungen wenig geeignet.

US 2014/134371 beschreibt transparente Polyamid-Elastomere. Diese enthalten u.a. alkylsubstituiertes Bis(aminocyclohexyl)methan und/oder alkylsubstituiertes Bis(aminocyclohexyl)propan. Diese Verbindungen sind jedoch toxisch.

Insofern war es Aufgabe der vorliegenden Erfindung, geeignete Formmassen bereitzustellen, welche eine hohe Transluzenz mit geringem Haze und eine Belagsfreiheit auch über einen längeren Zeitraum mit sich bringen. Zudem sollten sie gegenüber alkylsubstituiertem Bis(aminocyclohexyl)methan und/oder alkylsubstituiertem Bis(aminocyclohexyl)propan weniger toxisch sein.

Gelöst werden konnte diese Aufgabe durch eine Formmasse enthaltend Polyetheramid (PEA) auf Basis einer Untereinheit 1 aus mindestens einem linearen aliphatischen Diamin mit 5 bis 15 C-Atomen, vorzugsweise 6 bis 10 C-Atomen und mindestens einer linearen aliphatischen Dicarbonsäure mit 6 bis 14 C-Atomen, vorzugsweise 12 bis 14 C-Atomen und einer Untereinheit 2 aus mindestens einem Polyetherdiamin mit wenigstens 2,3 C-Atomen pro Ethersauerstoff und NH₂-Gruppen an den Kettenenden. Die Formmasse enthält maximal 2,5 Gew.-% eines funktionelle Gruppen enthaltenden Kautschuks, bezogen auf das Gesamtgewicht der Formmasse. Die Anzahl der C-Atome aus mindestens einer Komponente der Untereinheit 1 ausgewählt aus Diamin und Dicarbonsäure beträgt mindestens 13 C-Atome; die zahlenmittlere molare Masse der Untereinheit 2 beträgt 200 bis 900 g/mol. Vorzugsweise beträgt die molare Masse der Untereinheit 2 300 bis 700 g/mol. Die Untereinheit 1 bildet damit den allgemein als Hartblock bezeichneten Teil, die Untereinheit 2 den Weichblock. Der Begriff linear ist derart zu verstehen, dass die Kohlenstoffketten keine Verzweigungen aufweisen.

In einer bevorzugten Ausführungsform beträgt die zahlenmittlere molare Masse der Untereinheit 1 250 bis 4500 g/mol, besonders bevorzugt 400 bis 2500 g/mol, weiter besonders bevorzugt 400 bis 2000 g/mol, ganz besonders bevorzugt 500 bis 1600 g/mol. Dies führt zu einem Material mit höherer Transluzenz bei gleichzeitig geringerer Belagsbildung.

Das Polyetherdiamin des PEA ist vorzugsweise ausgewählt aus diaminiertem Polypropylenglykol, diaminiertem Polytetramethylenglykol, ihren Copolyethern und Mischungen daraus.

Die Summe der C-Atome aus Diamin und Dicarbonsäure im PEA beträgt 19 bis 24.

Geeignete Polyamide der Untereinheit 1 werden beispielsweise ausgewählt aus 6.13, 6.14, 10.14.

Die erfindungsgemäße Formmasse enthält maximal 2,5 Gew.-% eines funktionelle Gruppen enthaltenden Kautschuk. Vorzugsweise sind maximal 0,5 Gew-% und bevorzugt maximal 0,1 Gew.-% enthalten. Es ist besonders bevorzugt, wenn der Kautschuk nicht enthalten ist. Derartige Kautschuke sind beispielsweise beschrieben in EP-A-1518901.

Die erfindungsgemäße Formmasse enthält vorzugsweise maximal 8 mol-% alkylsubstituiertes Bis(aminocyclohexyl)-alkan-Derivaten, die ausgewählt sind aus alkylsubstituiertem Bis(aminocyclohexyl)methan und alkylsubstituiertem Bis(aminocyclohexyl)propan. Die Angabe bezieht sich auf die Summe der Stoffmenge aus linearen aliphatischen Diaminen der Untereinheit 1 und alkylsubstituierten Bis(aminocyclohexyl)-alkan-Derivaten. Bevorzugt sind maximal 5 mol-% und besonders bevorzugt maximal 2 mol-%. In einer ganz besonders bevorzugten Ausführungsform ist kein Bis(aminocyclohexyl)methan und kein Bis(aminocyclohexyl)propan in der Formmasse enthalten.

Ein weiterer Gegenstand der Erfindung ist ein geformter Gegenstand, hergestellt aus der erfindungsgemäßen Formmasse. Vorzugsweise ist der geformte Gegenstand ein Formteil, eine Folie, eine Borste, eine Faser oder ein Schaum. Der geformte Gegenstand kann beispielsweise hergestellt werden durch Pressen, Schäumen, Extrusion, Coextrusion, Blasformen, 3D-Blasformen, Coextrusionsblasformen, Coextrusions-3D-Blasformen, Coextrusions-Saugblasformen oder Spritzgießen. Dem Fachmann sind derartige Verfahren bekannt.

Ein weiterer Gegenstand der Erfindung stellt die Verwendung des erfindungsgemäßen geformten Gegenstands dar, welcher beispielsweise als Faserverbundbauteil, Schuhsohle, Oberbeläge von Skiern oder Snowboards, Medienleitung, Brillengestell, Designartikel, Dichtungsmaterial, Körperschutz (Body Protection), Dämmstoff oder foliertes Gehäuseteil genutzt werden kann.

### Beispiele

### Herstellung der Polyetheramide (PEA)

Allgemeine Arbeitsweise zur Herstellung der PEA:
Im Vorlagekessel einer 100 L-Zweikessel-Polykondensationsanlage, versehen mit einem Ankerrührer, werden unterhalb 60 °C nacheinander das Diamin, 10 % dessen Masse vollentsalztes (VE-) Wasser, Dicarbonsäure und das Polyetherdiamin (ELASTAMIN ^{®} RP405 bzw. RP 2005) vorgelegt. PPG-diamin bildet die Untereinheit 2. Bezogen auf das Polyetherdiamin werden 0,1% IRGANOX^{®} 1098 (BASF SE) als Prozessstabilisator zugesetzt. Bezogen auf den gesamten Feststoffgehalt werden 0,3 % 50 %ige hypophosphorige Säure als Katalysator zugesetzt. Nach mehrfacher Druckinertisierung mit N₂ wird der Kesselinhalt auf 180 °C - 190 °C erhitzt; bei 160 °C wird der Rührer zugeschaltet. Die Einsatzstoffe werden 1 Stunde verrührt und danach in den Polykondensationsreaktor, versehen mit einem Wendelrührer und Drehmomentaufnahme, überführt. Nach erfolgtem Druckausgleich zwischen beiden Behältern wird das Reaktorventil geschlossen und der Inhalt unter Rühren bei 25 Upm innerhalb von 6 Stunden auf 228°C - 232°C gebracht: Bei Erreichen von 21 bar autogenem Druck - normalerweise zwischen 210°C und 215°C Innentemperatur - wird eine zweistündige Druckhaltestufe eingehalten und danach kontinuierlich unter weiterem Hochheizen auf Atmosphärendruck entspannt. Nach 3 - 4 Stunden bei Atmosphärendruck wird - soweit das gewünschte Enddrehmoment noch nicht erreicht ist- innerhalb von 5 Stunden Vakuum angelegt, bis ein Endvakuum von 40 -60 mbar erreicht ist. Unter diesen Bedingungen wird weiter gerührt, bis das gewünschte Enddrehmoment erreicht ist. Die Schmelze wird als Strang in ein Wasserbad ausgefahren, granuliert und bei 70 °C - 90 °C in einem Taumeltrockner auf einen Wassergehalt < 0,1 % getrocknet.

### Stoffmengenverhältnis Untereinheit 1 zu Untereinheit 2: 100:103

In der folgenden Tabelle 1 sind die hergestellten PEA zusammengefasst. Die molare Masse der Untereinheit 1 ergibt sich aus dem Stoffmengenverhältnis der eingesetzten Dicarbonsäure und des Diamins.

**Tabelle 1: Dargestellte PEA**

| **Versuch** | **Diamin** | **Einwaage Diamin kg** | **Di-carbon-säure** | **Einwaage Dicarbon-säure kg** | **Mn Un-terein-heit 1** | **Diamin** | **Mn Diamin** | **Diamin-Einwaage kg** | **Produkt** |
|---|---|---|---|---|---|---|---|---|---|
| 1 | 6 | 13.721,10 | 13 | 31.278,90 | 4096 | A | 405 | 4.150,13 | PEA 6.13 |
| 2 | 6 | 13.082,82 | 13 | 31.917,18 | 2268 | A | 405 | 7.531,53 | PEA 6.13 |
| 3 | 6 | 12.355,98 | 13 | 32.644,02 | 1509 | A | 405 | 11.382,08 | PEA 6.13 |
| 4 | 6 | 11.491,36 | 13 | 33.508,64 | 1083 | A | 405 | 15.962,53 | PEA 6.13 |
| 5 | 6 | 12.507,91 | 14 | 32.492,09 | 2268 | A | 405 | 7.564,33 | PEA 6.14 |
| 6 | 6 | 11.764,68 | 14 | 33.235,32 | 1509 | A | 405 | 11.432,78 | PEA 6.14 |
| 7 | 6 | 10.880,37 | 14 | 34.119,63 | 1083 | A | 405 | 16.035,53 | PEA 6.14 |
| 8 | 10 | 16.106,96 | 14 | 28.893,04 | 2268 | A | 405 | 7.658,17 | PEA 10.14 |
| 9 | 10 | 13.988,53 | 14 | 31.011,47 | 1083 | A | 405 | 16.208,31 | PEA 10.14 |
| 10 | 10 | 10.634,92 | 14 | 34.365,08 | 600 | A | 405 | 29.743,73 | PEA 10.14 |
| 11 | 10 | 14.317,30 | 14 | 25.682,70 | 2268 | A | 405 + 2005 (1:1)^{*} | 5.485,47 + 5.548 | PEA 10.14 |
| 12 | 10 | 9.325,69 | 14 | 20.674,31 | 1083 | A | 405 + 2005 (1:1)^{*} | 8.707,37 +8.004 | PEA 10.14 |
| 13 | 10 | 9.325,69 | 14 | 20.674,31 | 1083 | A | 405 + 2005 (2:1)^{*} | 9.525,66 +4.764 | PEA 10.14 |
| 14 | 6 | 3,039 | 13 | 9,262 | 1083 | B (95:5) | 405 | 4,112 | PEA 6.13 |
| 15 | 6 | 3,039 | 13 | 9,262 | 1083 | B (95:5) | 405 | 4,112 | PEA 6.13 |
| 16 | 6 | 2,859 | 13 | 9,262 | 1083 | B (90:10) | 405 | 4,112 | PEA 6.13 |
| 17 | 6 | 3,491 | 13 | 9,709 | 1509 | B (95:5) | 405 | 3,155 | PEA 6.13 |
| 18 | 6 | 3,124 | 13 | 9,709 | 1509 | B (85:15) | 405 | 3,155 | PEA 6.13 |

| | | | | | | | | | |
|---|---|---|---|---|---|---|---|---|---|
| Alle Einwaagen in kg; * Massenverhältnis, korrigiert auf Äquivalentgewichte der Polyetherdiamine | | | | | | | | | |

| | |
|---|---|
| Diamin 6 = Hexamethylendiamin | Diamin 10 = 1,10-Decamethylendiamin |
| Dicarbonsäure 13 = Brassylsäure | Dicarbonsäure 14 = 1,14-Tetradecandisäure |
| Dicarbonsäure 18 = 1,18-Octadecandisäure | |

| | |
|---|---|
| Diamin A: Polypropylenglykoldiamin Diamin B: Hexamethylendiamin/Bis(4-amino-3-methylcyclohexyl)methan, Verhältnis in mol-% | |

Die dargestellten PEA wurden hinsichtlich Strang-Aspekt, relativer Viskosität ηᵣₑₗ und Schmelzpunkt Tm untersucht (vgl. Tab. 2). Strang-Aspekt: Visuelle Betrachtung. Viskosität: ISO 307. Tm: DSC, 2. Aufheizen nach ISO 11357.

**Tabelle 2: Eigenschaften der dargestellten PEA**

| **Versuch** | **Produkt** | **Strang-Aspekt** | ηᵣₑₗ | **Tm (DSC, 2. Aufh.)** |
|---|---|---|---|---|
| 1 | PEA 6.13 | Transparent | 1,63 | 189 |
| 2 | PEA 6.13 | Transparent | 1,85 | 187 |
| 3 | PEA 6.13 | Transparent | 1,62 | 182 |
| 4 | PEA 6.13 | Transparent | 1,86 | 178 |
| 5 | PEA 6.14 | Transparent | 1,80 | 191 |
| 6 | PEA 6.14 | Transparent | 1,73 | 185 |
| 7 | PEA 6.14 | Transparent | 1,78 | 180 |
| 8 | PEA 10.14 | Transparent | 1,81 | 184 |
| 9 | PEA 10.14 | Transparent | 1,76 | 174 |
| 10 | PEA 10.14 | Transparent | 1,63 | 141 |
| 11 | PEA 10.14 | opak | 1,76 | 174 |
| 12 | PEA 10.14 | opak | 1,66 | 169 |
| 13 | PEA 10.14 | Milchig-trüb | 1,62 | 168 |
| 14 | PEA 6.13 | Transparent | 1,64 | 175 |
| 15 | PEA 6.13 | Transparent | 1,68 | 174 |
| 16 | PEA 6.13 | Transparent | 1,74 | 170 |
| 17 | PEA 6.13 | Transparent | 1,72 | 180 |
| 18 | PEA 6.13 | Transparent | 1,79 | 173 |

### Prüfung der hergestellten Polyetheramide

### Belagstest

Aus den Polyetheramiden wurden Spritzplatten mit den Maßen 60 mm × 60 mm × 2 mm als Probenkörper gefertigt. Die Belagsbildung wurde ermittelt, nachdem der Probenkörper in einem geschlossenen Gefäß und Wasserdampfsättigung bei 75°C über einen Prüfzeitraum von 10 Tagen gelagert wurde. Der Belag wurde visuell mit einer vierstufigen Skala (von 0-3, wobei 0 = belagsfrei ist und 3 = stark belegt ist) beurteilt

### Bestimmung Transluzenz

Die Transluzenz der zuvor genannten Probenkörper wurde visuell ermittelt. Hierbei wurde folgende Bewertung vorgenommen (mit sinkender Transluzenz):
0 = transluzent ++
1 = transluzent +
2 = transluzent 0
3 = opak-milchig, transluzent 0
4 = opak-milchig, transluzent -
5 = milchig-weiß.

### Bestimmung Haze-Wert

Der Haze-Wert bestimmt die Illumination durch einen Gegenstand im Gegenlicht. Hier wird der Haze-Wert anhand der 60 × 60 × 2 mm Platten gemessen nach der ASTM-Norm D 1003 mit Konica-Minolta CM-3600d. Sofern die Probe opak-milchig oder gar milchig-weiß war, wurde in der Regel auf die Bestimmung des Haze-Wertes verzichtet.

**Tabelle 3: Testergebnisse von PEA 6.13-405 (erfindungsgemäß)**

| **Versuch** | **Produkt** | **Mn Untereinheit 1** | **Mn Untereinheit 2** | **Belagstest** | **Haze-Wert** | **Transluzenz (visuell)** |
|---|---|---|---|---|---|---|
| 1 | PEA 6.13 | 4096 | 405 | 0 | 60,3 | 0-1 |
| 2 | PEA 6.13 | 2268 | 405 | 0 | 56,6 | 0-1 |
| 3 | PEA 6.13 | 1509 | 405 | 0 | 48,1 | 0-1 |
| 4 | PEA 6.13 | 1083 | 405 | 0 | 42,3 | 0-1 |

Die Proben von PEA 6.13 weisen keinen Belag bei hoher Transluzenz und geringem Haze-Wert auf.

**Tabelle 4: Testergebnisse von PEA 6.14-405 (erfindungsgemäß)**

| **Versuch** | **Produkt** | **Mn Untereinheit 1** | **Mn Untereinheit 2** | **Belagstest** | **Haze-Wert** | **Transluzenz (visuell)** |
|---|---|---|---|---|---|---|
| 5 | PEA 6.14 | 2268 | 405 | 1 | 53,8 | 1 |
| 6 | PEA 6.14 | 1509 | 405 | 0-1 | 41,9 | 0 |
| 7 | PEA 6.14 | 1083 | 405 | 1 | 29,8 | 0 |

Die Probenkörper von PEA 6.14 sind transparent mit niedrigem Haze. Sie sind entweder belagsfrei oder weisen geringe Beläge auf.

**Tabelle 5: Testergebnisse von PEA 10.14-405 (erfindungsgemäß)**

| **Versuch** | **Produkt** | **Mn Untereinheit 1** | **Mn Untereinheit 2** | **Belagstest** | **Haze-Wert** | **Transluzenz (visuell)** |
|---|---|---|---|---|---|---|
| 8 | PEA 10.14 | 2268 | 405 | 1 | 20,7 | 0 |
| 9 | PEA 10.14 | 1083 | 405 | 0-1 | 18,5 | 0 |
| 10 | PEA 10.14 | 600 | 405 | 0 | 7,9 | 0 |

Proben von PEA 10.14 zeigen eine hohe Transluzenz und erfüllen den Belagstest.

**Tabelle 6: Testergebnisse von PEA 10.14-405/2005 (nicht erfindungsgemäß)**

| **Versuch** | **Produkt** | **Mn Untereinheit 1** | **Mn Untereinheit 2** | **Belagstest** | **Haze-Wert** | **Transluzenz (visuell)** |
|---|---|---|---|---|---|---|
| 11 | PEA 10.14 | 2268 | 405 + 2005 (1:1)^{*} | 0-1 | 99,2 | 4 |
| 12 | PEA 10.14 | 1083 | 405 + 2005 (1:1)^{*} | 1 | 102 | 4 |
| 13 | PEA 10.14 | 1083 | 405 + 2005 (2:1)* | 0-1 | 93,4 | 4 |

| | | | | | | |
|---|---|---|---|---|---|---|
| * Massenverhältnis | | | | | | |

PEA 10.14 mit einer Untereinheit, welche Monomere mit einer hohen molaren Masse von 2005 g/mol enthält, zeigen geringe bis keine Beläge. Allerdings sind die Probekörper milchig-weiß.

**Tabelle 7: Testergebnisse von PEA 6.13 enthaltend Diamin B (nicht erfindungsgemäß)**

| **Versuch** | **Produkt** | **Mn Untereinheit 1** | **Mn Untereinheit 2** | **Belagstest** | **Haze-Wert** | **Transluzenz (visuell)** |
|---|---|---|---|---|---|---|
| 14 | PEA 6.13 | 1083 | 405 | 2 | 24,5 | 0 |
| 15 | PEA 6.13 | 1083 | 405 | 2 | 33,4 | 0 |
| 16 | PEA 6.13 | 1083 | 405 | 1 | 21,5 | 0 |
| 17 | PEA 6.13 | 1509 | 405 | 3 | 32,8 | 0 |
| 18 | PEA 6.13 | 1509 | 405 | 1-2 | 12,6 | 0 |

Die erhaltenen Formkörper enthaltend Diamin B waren transparent, allerdings wiesen sie Beläge auf. Zudem gab es Entformungsprobleme beim Spritzguss. Darüber hinaus formten sich die Teststäbe halbrund (entlang der Längsachse).

## Patentansprüche

1. Formmasse enthaltend Polyetheramid (PEA) auf Basis einer Untereinheit 1 aus mindestens einem linearen aliphatischen Diamin mit 5 bis 15 C-Atomen und mindestens einer linearen aliphatischen oder aromatischen Dicarbonsäure mit 6 bis 14 C-Atomen und einer Untereinheit 2 aus mindestens einem Polyetherdiamin mit wenigstens 2,3 C-Atomen pro Ethersauerstoff und NH₂-Gruppen an den Kettenenden, wobei die Formmasse maximal 2,5 Gew.-% eines funktionelle Gruppen enthaltenden Kautschuk enthält, **dadurch gekennzeichnet, dass** die Anzahl der C-Atome aus mindestens einer Komponente der Untereinheit 1 ausgewählt aus Diamin und Dicarbonsäure mindestens 13 C-Atome beträgt; die zahlenmittlere molare Masse der Untereinheit 2 beträgt 200 bis 900 g/mol.

2. Formmasse nach Anspruch 1, **dadurch gekennzeichnet, dass** die zahlenmittlere molare Masse der Untereinheit 2 300 bis 700 g/mol beträgt.

3. Formmasse nach einem der vorherigen Ansprüche, **dadurch gekennzeichnet, dass** die zahlenmittlere molare Masse der Untereinheit 1 250 bis 4500 g/mol beträgt.

4. Formmasse nach Anspruch 3, **dadurch gekennzeichnet, dass** die zahlenmittlere molare Masse der Untereinheit 1 400 bis 2500 g/mol beträgt.

5. Formmasse nach einem der vorherigen Ansprüche, **dadurch gekennzeichnet, dass** das Polyetherdiamin ausgewählt ist aus diaminiertem Polypropylenglykol, diaminiertem Polytetramethylenglykol, ihren Copolyethern und Mischungen daraus.

6. Formmasse nach einem der vorherigen Ansprüche, **dadurch gekennzeichnet, dass** die Summe der C-Atome aus Diamin und Dicarbonsäure 19-24 beträgt.

7. Formmasse nach einem der vorherigen Ansprüche, **dadurch gekennzeichnet, dass** die Untereinheit 1 ausgewählt ist aus Polyamid 6.13, 6.14 und 10.14.

8. Formmasse nach einem der vorherigen Ansprüche, **dadurch gekennzeichnet, dass** der Anteil an Kautschuk maximal 0,5 Gew.-%, bevorzugt maximal 0,1 Gew.-% beträgt.

9. Formmasse nach einem der vorherigen Ansprüche, **dadurch gekennzeichnet, dass** das Diamin 6 bis 10 C-Atome enthält.

10. Formmasse nach einem der vorherigen Ansprüche, **dadurch gekennzeichnet, dass** die Dicarbonsäure 12 bis 14 C-Atome enthält.

11. Geformter Gegenstand, hergestellt aus der Formmasse gemäß einem der vorhergehenden Ansprüche.

12. Geformter Gegenstand nach Anspruch 11, **dadurch gekennzeichnet, dass** er ein Formteil, eine Folie, eine Borste, eine Faser oder ein Schaum ist.

13. Geformter Gegenstand nach einem der Ansprüche 11 oder 12, hergestellt durch Pressen, Schäumen, Extrusion, Coextrusion, Blasformen, 3D-Blasformen, Coextrusionsblasformen, Coextrusions-3D-Blasformen, Coextrusions-Saugblasformen oder Spritzgießen.

14. Verwendung eines geformten Gegenstands nach einem der Ansprüche 11 bis 13, als Faserverbundbauteil, Schuhsohle, Oberbeläge von Skiern oder Snowboards, Medienleitung, Brillengestell, Designartikel, Dichtungsmaterial, Körperschutz (Body Protection), Dämmstoff, folierte Gehäuseteile.

## Claims

1. Moulding compound comprising polyetheramide (PEA) based on a subunit 1, composed of at least one linear aliphatic diamine having 5 to 15 carbon atoms and at least one linear aliphatic or aromatic dicarboxylic acid having 6 to 14 carbon atoms, and on a subunit 2, composed of at least one polyether diamine having at least 2.3 carbon atoms per ether oxygen and NH₂ groups at the chain ends, wherein the moulding compound contains at most 2.5% by weight of a rubber containing functional groups, **characterized in that** the number of carbon atoms from at least one component of subunit 1 selected from diamine and dicarboxylic acid is at least 13 carbon atoms, the number-average molar mass of subunit 2 being 200 to 900 g/mol.

2. Moulding compound according to Claim 1, **characterized in that** the number-average molar mass of subunit 2 is 300 to 700 g/mol.

3. Moulding compound according to either of the preceding claims, **characterized in that** the number-average molar mass of subunit 1 is 250 to 4500 g/mol.

4. Moulding compound according to Claim 3, **characterized in that** the number-average molar mass of subunit 1 is 400 to 2500 g/mol.

5. Moulding compound according to any of the preceding claims, **characterized in that** the polyether diamine is selected from diaminated polypropylene glycol, diaminated polytetramethylene glycol, copolyethers of these and mixtures thereof.

6. Moulding compound according to any of the preceding claims, **characterized in that** the sum total of the carbon atoms from diamine and dicarboxylic acid is 19-24.

7. Moulding compound according to any of the preceding claims, **characterized in that** subunit 1 is selected from nylon-6,13, nylon-6,14 and nylon-10,14.

8. Moulding compound according to any of the preceding claims, **characterized in that** the proportion of rubber is at most 0.5% by weight, preferably at most 0.1% by weight.

9. Moulding compound according to any of the preceding claims, **characterized in that** the diamine contains 6 to 10 carbon atoms.

10. Moulding compound according to any of the preceding claims, **characterized in that** the dicarboxylic acid contains 12 to 14 carbon atoms.

11. Moulded article produced from the moulding compound according to any of the preceding claims.

12. Moulded article according to Claim 11, **characterized in that** said article is a moulding, a film, a bristle, a fibre or a foam.

13. Moulded article according to either of Claims 11 and 12, produced by compression-moulding, foaming, extrusion, coextrusion, blow moulding, 3D blow moulding, coextrusion blow moulding, coextrusion 3D blow moulding, coextrusion suction blow moulding or injection moulding.

14. Use of a moulded article according to any of Claims 11 to 13 as a fibre composite component, shoe sole, top sheets for skis or snowboards, line for media, spectacle frame, design article, sealing material, body protection, insulating material, housing parts provided with a film.

## Revendications

1. Masse à mouler contenant un polyétheramide (PEA) à base d'une sous-unité 1 composée d'au moins une diamine aliphatique linéaire comportant 5 à 15 atomes de C et d'au moins un acide dicarboxylique aliphatique ou aromatique linéaire comportant 6 à 14 atomes de C et d'une sous-unité 2 composée d'au moins une polyétherdiamine comportant au moins 2,3 atomes de C par oxygène d'éther et des groupes NH₂ au niveau des extrémités de chaînes, les masses à mouler contenant au moins maximum 2,5 % en poids d'un caoutchouc contenant des groupes fonctionnels, **caractérisée en ce que** le nombre d'atomes de C d'au moins un composant de la sous-unité 1 choisi parmi diamine et acide dicarboxylique est d'au moins 13 atomes de C ; la masse molaire moyenne en nombre de la sous-unité 2 est de 200 à 900 g/mole.

2. Masse à mouler selon la revendication 1, **caractérisée en ce que** la masse molaire moyenne en nombre de la sous-unité 2 est de 300 à 700 g/mole.

3. Masse à mouler selon l'une quelconque des revendications précédentes, **caractérisée en ce que** la masse molaire moyenne en nombre de la sous-unité 1 est de 250 à 4 500 g/mole.

4. Masse à mouler selon la revendication 3, **caractérisée en ce que** la masse molaire moyenne en nombre de la sous-unité 1 est de 400 à 2 500 g/mole.

5. Masse à mouler selon l'une quelconque des revendications précédentes, **caractérisée en ce que** la polyétherdiamine est choisie parmi un polypropylèneglycol diaminé, un polytétraméthylèneglycol diaminé, leurs copolyéthers et des mélanges correspondants.

6. Masse à mouler selon l'une quelconque des revendications précédentes, **caractérisée en ce que** la somme des atomes de C de diamine et d'acide dicarboxylique est de 19 à 24.

7. Masse à mouler selon l'une quelconque des revendications précédentes, **caractérisée en ce que** la sous-unité 1 est choisie parmi un polyamide 6.13, 6.14 et 10.14.

8. Masse à mouler selon l'une quelconque des revendications précédentes, **caractérisée en ce que** la proportion de caoutchouc est de maximum 0,5 % en poids, préférablement de maximum 0,1 % en poids.

9. Masse à mouler selon l'une quelconque des revendications précédentes, **caractérisée en ce que** la diamine contient 6 à 10 atomes de C.

10. Masse à mouler selon l'une quelconque des revendications précédentes, **caractérisée en ce que** l'acide dicarboxylique contient 12 à 14 atomes de C.

11. Objet moulé, fabriqué à partir de la masse à mouler selon l'une quelconque des revendications précédentes.

12. Objet moulé selon la revendication 11, **caractérisé en ce que** c'est une pièce moulée, une feuille, une soie, une fibre ou une mousse.

13. Objet moulé selon l'une quelconque des revendications 11 et 12, fabriqué par pressage, moussage, extrusion, coextrusion, moulage par gonflage, moulage par gonflage 3D, coextrusion soufflage, coextrusion soufflage 3D, coextrusion-moulage par aspiration-soufflage ou moulage par injection.

14. Utilisation d'un objet moulé selon l'une quelconque des revendications 11 à 13, en tant qu'élément composite fibreux, semelles de chaussures, revêtements superficiels de skis ou de snowboards, conduits de fluides, monture de lunettes, articles de design, matériau d'étanchéité, protection corporelle (protection du corps), matériau isolant, pièces de boîtier pelliculées.
